# EUROPEAN PATENT SPECIFICATION

(11) **EP 2 107 622 B1**
(45) Date of publication and mention of the grant of the patent: **02.11.2011**
(21) Application number: 08006688.9
(22) Date of filing: 01.04.2008
(51) Int. Cl.: H01L 41/09, H02N 2/02, E05B 47/00

(54) **Shock recognition system in a doorlock using a linear electromechanical motor**
Stoßerkennungssystem in einem Türschloss mit einem linearen elektromechanischen Motor
Système de reconnaissance des chocs dans une serrure de porte utilisant un moteur électromécanique linéaire

(43) Date of publication of application: 07.10.2009
(73) Proprietor: MINEBEA CO.,LTD., Kitasaku-gun, 389-0293 Nagano (JP); PiezoMotor Uppsala Aktiebolag, 754 50 Uppsala (SE)
(72) Inventor: Schneider, Helmut, 78658 Zimmern-Flözlingen (DE); Trietz, Thomas, 78050 Villingen-Schwenningen (DE); Schmid, Guido, 78098 Triberg (DE); Wilmer, Martin, 77948 Friesenheim (DE); Johansson, Stefan, 75450 Uppsala (SE); Larson, Anders, 75450 Uppsala (SE)
(74) Representative: Liesegang, Eva

(56) References cited:
- WO-A-01/71899
- WO-A-2004/001867
- DE-A1- 10 052 769
- DE-A1-102006 004 629
- WISCHNEWSKIY W ET AL: "New ultrasonic piezoelectric actuator for nanopositioning" ACTUATOR 2004, 9TH INTERNATIONAL CONFERENCE ON NEW ACTUATORS, 14-16 JUNE 2004, BREMEN, GERMANY, 2004, pages 118-122, XP009054063

## Description

The present invention relates generally to miniature motors and, more specifically, to an electromechanical motor having an actuating element made from an electromechanical material.

WO 2004/001867 describes an electromechanical motor which can be used as a miniature actuator, which can be operated at high speed in relation to the size, generating high drive forces by using an electromechanical drive element. The electromechanical motor described in WO 2004/001867 comprises a stator having a drive element consisting of two serially connected bending sections and a central drive pad attached to the drive element for actuating on a body to be moved, such as a shuttle. The drive element extends parallel to the surface of the shuttle and is made from an electromechanical material, such as piezoelectric material, electrostrictive material or magnetostrictive material. Such materials change their shape when subjected to an electric potential or magnetic field, respectively. The drive element is preferably symmetric around the drive pad, wherein the two bending sections perform a bending movement similar to a propagating wave when an electric potential or magnetic field is applied. The wave-like movement is transferred onto the shuttle via the drive pad thereby gradually advancing the shuttle.

The electromechanical motor according to WO 2004/001867 has proven to operate well, in particular when piezoelectric drive elements are used. The movement of the drive element is transferred onto the shuttle via the drive pads utilizing friction contact between the drive pad and the shuttle. The electromechanical motor can generate fast and precise lateral displacement of the shuttle and thus an application specific element connected thereto. Response time is short. One potential application of a miniature electromechanical motor of this type is in a central locking system of a motor vehicle where the shuttle is used to drive a lock cylinder.

DE 10 2006 004 629 A1 describes a piezo electric motor for controlling the opening and closing of a storage compartment. Pressure on the compartment lid will deform a piezo drive and hence can be detected in response to a corresponding output signal from the piezo drive. Pressure on the compartment lid is used for controlling the piezo drive in such a way that the compartment is locked if it was unlocked and the compartment is unlocked if it was locked. A sensor is used for determining whether the compartment was locked or unlocked.

When an electromechanical motor is used for displacing an actuator in a translational direction, it might be possible to manipulate the movement of the actuator by an external force applied and, in particular, by shock or other mechanical stress imposed on the actuator so that the shuttle unintentionally slips along the drive pad.

In such a case, it would be highly disadvantageous if a lock cylinder could be manipulated by applying shock or other mechanical stress to the motor.

It is therefore an object of the present invention to provide an electromechanical motor for driving an actuator which is save against manipulation through applying an external force to the motor. This object is solved by an electromechanical motor according to claims 1 and 3 and by a method for controlling an electromechanical motor according to claim 12.

According to the invention, the electromechanical motor comprises a stator, including a drive unit and a frame portion, the frame portion holding the drive unit; and a shuttle adapted to be moved relative to the stator in a translational direction, the shuttle movement being controlled by said drive unit. The drive unit comprises at least one electromechanical drive element, extending along said translational direction, and a drive pad adapted to transfer a movement of said drive element onto said shuttle. An electromechanical drive element, in the context of the present invention, is an element made from an electromechanical material, i.e. a material which changes its shape upon application of an electric voltage or current or a magnetic field. Further, the electromechanical material also creates the reverse effect, i.e. when the material is deformed by application of mechanical stress or the like, e.g. an electric voltage, a change in permittivity or a magnetic field respectively are generated. A linearly increasing voltage with applied mechanical strain is known in the art as piezoelectric effect, for example. Other sensor effects can be obtained from electrostrictive materials as well as magnetostrictive materials.

According to one aspect of the present invention, processing means are connected to the drive element and adapted to receive and process an electric or magnetic output signal generated by said drive element in response to mechanical stress being applied to the drive element. Accordingly, the processing means receive an output signal indicative of a possible manipulation of the electromechanical motor by external forces such as shock or other mechanical stress imposed. The signal can be used to identify a potential manipulation of the motor and initiate appropriate counter measures.

According to another aspect of the invention, the electromechanical motor additionally comprises a position sensor adapted to detect a change of position of the shuttle relative to the stator. In this embodiment, the processing means are alternatively or additionally connected to the position sensor and are adapted to receive and process the output signal generated by the position sensor while the drive unit is inactive. If the drive unit is inactive and a change of position of the shuttle is detected, this detected change of position can be used to identify a potential manipulation of the motor. The detection of position changes can be used alternatively or additionally to the detection of the output signal of the drive elements. The position sensor preferably is implemented using one or more magnetic sensors, like Hall sensors, which cooperate with a magnetic element provided in the shuttle, but other sensor types, as optical ones for example, can also be implemented.

The electromechanical motor comprises a control unit for controlling the drive unit so as to generate a movement of the drive element and thus a movement of the shuttle via the drive element and the drive pad. According to the invention, the control unit is adapted to receive the output signal. The output signal can be used for interrupting the current "normal" operation of the motor or for waking-up the control unit of the motor if it is in stand-by operation. For example, if the output signal is received while the motor is inactive, the control unit can be activated in order to reset the shuttle to a predetermined position. The control unit is configured to control the drive unit in such a way that the shuttle is moved in a predetermined direction, even when the absolute position is not known.

If, for example, the electromechanical motor is used as an actuator of a central locking system, upon detection of the output signal, the control unit can cause the drive element to move the shuttle towards a position where a lock cylinder associated with the shuttle closes a lock. That is, independent of the previous state of the electric motor, once an output signal of the drive unit and/or the position sensor indicating manipulation of the drive element is detected, the electric motor would always be driven in such a way that the lock cylinder connected to the shuttle causes the lock to be closed. In more general terms, upon detection of the output signal, a predetermined movement is carried out by the shuttle of the electromechanical motor.

Preferably, the position sensor is also adapted to detect the absolute position of the shuttle relative to the stator. In this case, the control unit is adapted to control the drive unit so that the shuttle is moved to a predetermined position relative to the stator, such as a nominal position.

In a preferred embodiment of the invention, the shuttle comprises a support member carrying a drive rail extending in the displacement direction. The drive rail preferably is made from a material of lower specific weight than the material of the support member. The drive rail may for example be made from ceramic. Providing a shuttle of low weight has the advantage that the shuttle has low inertia so that the actuation of the shuttle can be fast, in particular in case of manipulation of the electromechanical motor. Moreover, if the mass of the support member is low, the motor is less vulnerable to manipulation and, in particular, to shock and other external force applied to the motor.

In a practical embodiment where the electromechanical motor is used as an actuator for a central locking system, a response time from detection of the sensor signal to bringing the actuator in the fully closed position is less then 100 milliseconds. Therefore, if an attack against such a lock was carried out by applying an external force to the lock, the electromechanical motor would re-lock before the respective door could be opened. Accordingly, the electromechanical motor according to the invention not only provides short response for actuating the drive element and thus the shuttle but also very fast response in case of manipulation of the motor.

In the preferred embodiment, the drive element comprises a piezoelectric material, adapted to generate an electric potential in response to applied mechanical stress according to the piezoelectric effect. In this case, the drive element is connected to a voltage sensor. In an alternative embodiment, the drive element comprises magnetostrictive material, adapted to generate a magnetic field in response to applied mechanical stress. In this case, the drive element is connected to a magnetic field sensor.

### DESCRIPTION OF DRAWINGS

The invention is described with reference to preferred embodiments in view of the drawings, in which:
- Fig. 1A: shows a cross section through the housing of an electromechanical motor for explaining the sections of Figs. 1B and 1C;
- Fig. 1B: shows a sectional view of an embodiment of the electromechanical motor according to the invention along the line A-A in Fig. 1A;
- Fig. 1C: shows a sectional view through the electromechanical motor of Fig. 1B along the line C-C in Fig. 1A;
- Fig. 2A: shows an isometric view of the carrier portion which is used in the electromechanical motor of Figs. 1B and 1C;
- Fig. 2B: shows a front view of the carrier portion of Fig. 1A;
- Fig. 2C: shows a sectional view through the carrier portion along the line A-A in Fig. 2B;
- Fig. 2D: shows a sectional view through the carrier portion along the line B-B in Fig. 2C;
- Fig. 3A: shows a side view of an adapter which is part of the electromechanical motor of Figs. 1A to 1C;
- Fig. 3B: shows a sectional view through the adapter;
- Fig. 4A: shows a schematic diagram of the movement of the drive element in the motor according to the invention; and
- Fig. 4B: shows a similar diagram as Fig. 4A wherein a movement of the drive element at a second order of a resonant frequency is shown.

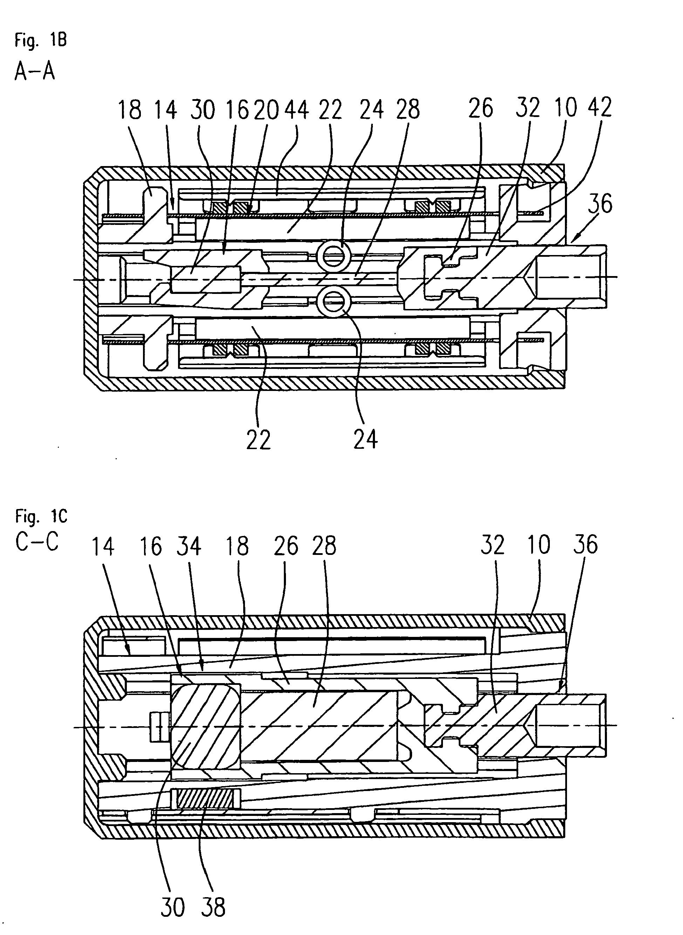

Figs. 1A, 1B, and 1C show sectional views through an electromechanical motor according to an embodiment of the invention wherein Fig. 1A only shows the motor housing 10 and a connector component 12 and serves as reference for the sectional views of Figs. 1B and 1C. The connection of signal and supply lines to the electromechanical motor preferably is made through a flexible printed circuit board, as explained in further detail below.

The electromechanical motor comprises a stator 14, i.e. a stationary unit, and a shuttle 16, i.e. a moveable unit, which can be moved relative to the stator in a translational direction which is the direction of the motor axis. The main components of the stator 14 are a frame component 18 and a drive unit 20. The drive unit 20 comprises two parallel electromechanical drive elements 22, each being associated with a drive pad 24. The electromechanical drive elements 22 are made from a material whose shape changes when an electrical current or an electrical voltage or, in another embodiment, a magnetic field is applied to the drive element 22. Examples of such materials are electrostrictive, in particular piezoelectric, and magnetostrictive materials. Preferably, the drive elements 22 are made from a piezoelectric material which changes its shape when an electric voltage is applied and which, in the reverse, generates an electrical potential upon deformation. The drive pad 24, of the embodiment disclosed, has the shape of a tube and can be joined with the drive element e.g. by using adhesive. The drive pad 24 and the joint should have a certain degree of elasticity in both a direction perpendicular and parallell to the drive element 22.

As will be explained below, the drive unit 20 cooperates with the shuttle 16. The main components of the shuttle 16 are a support member 26 and a drive rail 28. The support member 26 preferably is made from injection molding using a plastic material. It carries the drive rail 28 at both of its end faces. The drive rail 28 preferably is made from a ceramic, such as alumina, having high wear resistance.

The support member 26 is provided for holding the drive rail 28 and further for receiving a sensor magnet 30 and an adapter piece 32. The sensor magnet 30 is provided for detecting the position of the shuttle 16, as explained below. The adapter piece 32 is provided for connecting an actuator which is moved in translational direction by the electromechanical motor.

The drive rail 28, sensor magnet 30 and adapter piece 32 preferably are held in the support member 26 using a snap-in connection providing form and force closure.

Between the support member 26 and the frame member 18, a first slide bearing 34 is provided; another slide bearing 36 is provided between the adapter piece 32 held in the support member 26 and the frame member 18. The support member 26 preferably is made from a plastic material having a low friction coefficient, for example a thermoplast containing Teflon.

The sensor magnet 30 cooperates with a Hall sensor 38 or other magnetic sensors for detecting the position of the shuttle 16 relative to the frame member 18. The Hall sensor 38 as well as the drive elements 22 is mounted to a flexible printed circuit board 42 which is arranged around the frame member 18. The circuit board 42 is held in position using a clip-like spring 44, which also provides a definite initial tension between the drive pad 24 and the drive rail 28. The circuit board 42 can have a lateral extension for leading signal and supply lines out of the motor. In this case, the connector component 12 can be integrated with the circuit board 42.

The frame member 18 is attached to the motor housing 12 using snap-in connectors or by injection molding providing form and force closure. Thus, the motor housing 10 can simply

The frame member 18 is attached to the motor housing 12 using snap-in connectors or by injection molding providing form and force closure. Thus, the motor housing 10 can simply be slid over the frame member 18 and provides good protection of the electromechanical motor.

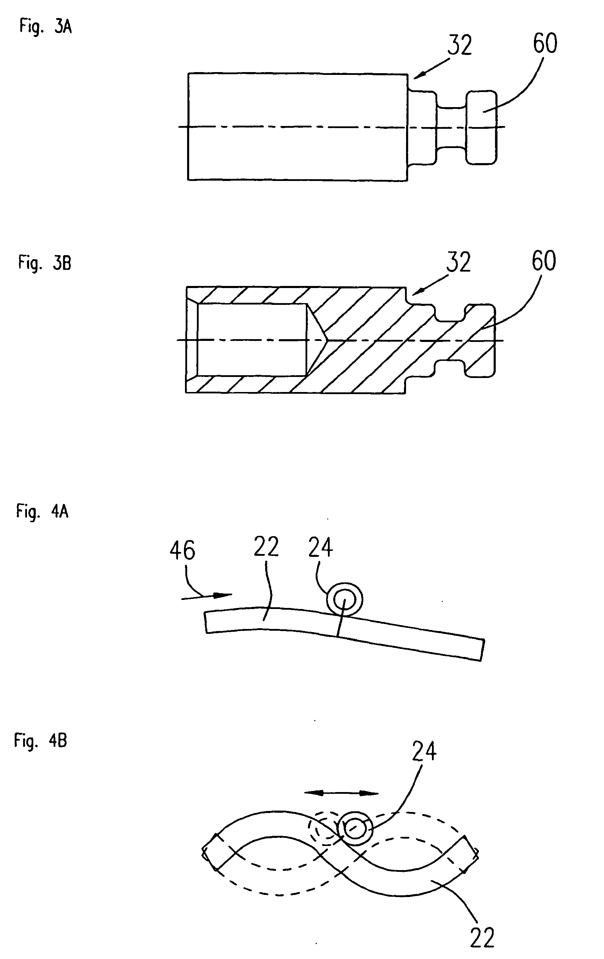

The motor operates as follows: The two drive elements 22 are arranged parallel to and on both sides of the drive rail 28. Each drive element 22 comprises two bending sections on both sides of the centrally arranged drive pad 24. The two bending sections therefore are arranged serially along the length of the surface of the drive rail 28 in the direction of the desired translational movement (direction of motor axis). These bending sections preferably are made from bimorphous piezoelectric elements which are bendable in a direction which is perpendicular to the translational direction. Each bimorphous piezoelectric element comprises two parallel active volumes which can be excited individually. By applying different voltages to the active volumes a bending movement is generated. This bending movement is shown schematically in Figs. 4A and 4B which are taken from WO 2004/001867 A1. With regard to the fundamental operation of the electromechanical motor reference is made to this document.

As shown in Figs. 4A and 4B, the bending movement induces a wave which propagates from a first end of the drive element 22, from the left in Fig. 4A, in the direction of the arrow 46. Without loss, the drive unit 20 would work at resonant frequency and the wave would be reflected at the other hand of the drive element 22. Fig. 4B shows the operation of the drive element 22 at a second order resonance frequency where oscillation occurs. This is described with further detail in WO 2004/001867 A1.

The drive element 22 usually is driven by electrical voltage pulses which are applied to the bending sections. The bending movement of the drive element 22 which propagates along the length of the drive element 22 induces a corresponding movement of the drive pad 24 which is transferred to the drive rail 28. In this case, the drive pad 24 moves both perpendicular as well as parallel to the surface of the drive rail 28. Therefore, the drive rail 28 can be moved back and forth step by step in the translational direction.

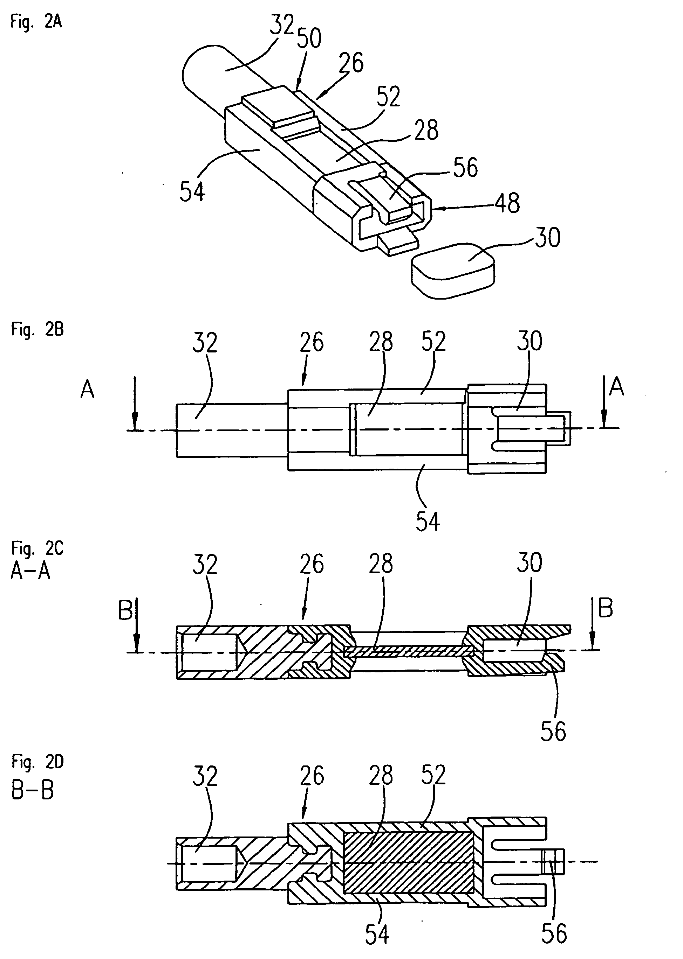

In Figs. 2A to 2D, the support member 26 is shown in an isometrical view, plane view and sectional view, respectively. The support member 26 is an important part of the electromechanical motor; it is used for holding the drive rail 28, the sensor magnet 30 and the adapter piece 32. The sensor magnet 30 and the adapter piece 32 are located at opposing end faces 48, supported by the support member 26 at its both end faces, as can be seen best in Fig. 2C. The end faces of the support member 26 are connected by lateral bars 52, 54 so that the surface of the drive rail 28 is exposed and can be moved back and forth via the drive pad 24 (Fig. 1B).

Latches 56 are formed on the support member 26 for connecting the sensor magnet 30 and the adapter piece 32 with the support member 26 by for and force closure. Also the connection between the drive rail 28 and the support member 26 preferably is achieved by form and force closure wherein alternatively or additionally, an adhesive bond can be provided.

The design of the support member 26 of the motor according to the present invention allows optimizing the individual components of the shuttle 16 for their intended use. For example, the support member 26 is preferably made from a plastic material having a low friction coefficient for providing a low-friction slide bearing 34, 36 between the support member 26 and the frame member 18. The drive rail 28, on the other hand, is made from a particularly abrasion-proof material which can be in frictional contact with the drive pad 24 for transferring the movement of the drive unit 20 onto the drive rail 28 and for preventing as far as possible that the drive pad slips on the drive rail 28. A suitable material for the drive rail 28 is a ceramic, such as alumina. Such a material is highly abrasion-proof and has a low specific weight so that the design of the support member 26 includes a low-mass drive rail and thus has low inertia. Accordingly, the electromechanical motor is less sensible to shock imposed on the motor where the drive rail 28 could slip relative to the drive pad 24.

For increasing the friction coefficient between the drive rail 28 and the drive pad 24, the surface of the drive rail 28 could be patterned, e.g. by providing ribs or grooves and a clip-like spring 44 is used to create an initial force as described above.

Figs. 3A and 3B show the adapter piece 32 in plane view as well as in a sectional view, respectively. The adapter piece 32 comprises a foot 60 for connection to the support member 26. Using said foot 60, the adapter can be snapped-in to the support member 26. The adapter piece 32 is used as a standard adapter for connecting the shuttle 16 with any application specific detail, such as a steel pin or a lock cylinder of a locking mechanism of a central locking system of a motor vehicle.

For driving the electromechanical motor, an A.C. voltage is applied to the drive elements 22 via the circuit board 42 wherein different control electrodes (not shown) are provided for driving the motor in the two different directions. This is described with further details in WO 2004/001867 A1. Thus, movement of the drive rail 28 as shown in Fig. 4A is generated in the direction of the arrow 46 or in the opposite direction wherein the drive pad 24 transfers this movement to the drive rail 28.

According to the present invention, the drive elements 22 are made from an electromechanical material which not only changes its form when an electric voltage or a magnetic field is supplied but which also generate e.g. an electrical voltage or magnetic field upon deformation. Such electromechanic materials comprise e.g. ferroelectric and magnetostrictive materials. For piezoelectric materials this phenomenon is known as the piezoelectric effect. In an electrostrictive material most commonly the change in permittivity is converted to a voltage signal by processing means. The voltage or the magnetic field can be detected for monitoring an impact or another external force applied to the motor and for generating a corresponding output signal. This is how an unwanted movement of the shuttle 16 is detected and corrected if necessary.

The present invention provides processing means (not shown) which are connected to the drive elements 22 and which are adapted to detect an electrical or magnetic output signal which is generated by the drive element 22 if subject to mechanical stress, such as shock or vibrations. The processing means can be arranged on the circuit board inside the motor or outside of the motor and it can be connected to the drive element 22 via the connection component 12. Processing means can be part of a control unit (not shown) of the electromechanical motor. The output signal of the drive element 22 is used as an indication for a manipulation of the motor by external forces. Such a manipulation, e.g. a strong stroke to the motor or vibrations imposed on the motor, could cause the drive rail 28 to move relative to the drive pad 24 wherein the drive rail 28 slips relative to the drive pad. If, for example, the motor is used for a central locking system, this could lead to an unwanted opening of the lock.

In order to prevent this to happen, the present invention, upon detecting such an output signal of the drive elements, generates an interrupt in the control unit which interrupts the normal operation or a stand-by operation of the control unit and initiates a defined movement of the shuttle. For example, upon occurrence of such an interrupt, the shuttle could be moved to a predefined position. This predefined position could be an initial position of the shuttle in the motor or, in the particular embodiment of the central locking system, a locking position of an actuator connected to the motor.

The present invention achieves extremely short response times from detecting the deformation of the drive element 22 until movement of the shuttle into the desired position, the response times clearly being less than 100 milliseconds.

Additionally, the motor according to the present invention can detect the position of the shuttle 16 relative to the frame member using the sensor magnet 30 and the Hall sensor 38 for taking into account the current position of the shuttle when driving the shuttle 16. This is particularly advantageous because, when the interrupt is generated, the position of the shuttle 16 relative to the support member 26 usually is not known.

In the electromechanical motor according to the present invention, the drive elements 22, therefore, not only serve for driving the shuttle 16 in the translational direction but they also serve as an acceleration sensor for detecting external forces applied to the motor. When detecting a respective output signal of the drive elements, the control unit can generate an interrupt which brings the control unit from a stand-by mode to an active mode and which initiates a predefined procedure for driving the shuttle 16 into a desired position. The function of the control unit can be implemented using software, hardware or firmware.

Alternatively or additionally to using the output signal of the drive elements for detecting manipulation of the motor, it is also possible to use the Hall sensor 38 for detecting an unwanted movement of the shuttle. If the Hall sensor 38 detect a change of position of the shuttle 16 relative to the frame member 18, while the drive unit is inactive, i.e. in a state where the shuttle should not move, these output signals of the Hall sensors can be used as an indication that there is unwanted manipulation of the electromechanical motor and, the control unit can be activated as described above.

### List of reference numbers

- 10: Motor housing
- 12: Connector component
- 14: Stator
- 16: Shuttle
- 18: Frame component
- 20: Drive unit
- 22: Drive elements
- 24: Drive pad
- 26: Support member
- 28: Drive rail
- 30: Sensor magnet
- 32: Adaptor piece
- 34, 36: Slide bearing
- 38: Hall sensor
- 42: Flexible printed circuit board
- 44: Clip-like spring
- 46: Arrow
- 48, 50: End faces
- 52, 54: Lateral bars
- 56: Latches
- 60: Foot

## Claims

1. Electromechanical motor, comprising
a stator (14), including a drive unit (20) and a frame portion (18), the frame portion holding the drive unit;
a shuttle (16) adapted to be moved relative to the stator (14) in a translational direction, the shuttle movement being controlled by said drive unit (20), wherein said drive unit (20) comprises at least one electromechanical drive element (22), extending along said translational direction, and a drive pad (24) adapted to transfer a movement of said drive element (22) onto said shuttle (16); **characterised by**
processing means connected to said drive element (22) and adapted to receive and process an electric or magnetic output signal generated by said drive element (22) in response to a deformation of said drive element due to an impact or other external forces being applied to the motor, said processing means comprising a control unit for controlling said drive unit so as to generate a movement of said drive element so that the shuttle is moved in a predetermined direction relative to the stator in response to said output signal and irrespective of the previous state of the electric motor.

2. Motor according to claim 1, further comprising
a position sensor (38) adapted to detect the position of the shuttle relative (16) to the stator (14).

3. Electromechanical motor, comprising
a stator (14), including a drive unit (20) and a frame portion (18), the frame portion holding the drive unit;
a shuttle (16) adapted to be moved relative to the stator (14) in a translational direction, the shuttle movement being controlled by said drive unit (20), wherein said drive unit (20) comprises at least one electromechanical drive element (22), extending along said translational direction, and a drive pad (24) adapted to transfer a movement of said drive element (22) onto said shuttle (16);
a position sensor (38) adapted to detect a change of position of the shuttle (16) relative to the stator (14); **characterised by**
processing means connected to said position sensor and adapted to receive and process an output signal generated by said position sensor, said processing means comprising a control unit for controlling said drive unit so as to generate a movement of said drive element so that the shuttle is moved in a predetermined direction relative to the stator in response to said output signal and irrespective of the previous state of the electric motor.

4. Motor according to claim 2 or 3 wherein the position sensor (38) comprises Hall elements or optical sensors.

5. Motor according to one of the preceding claims, wherein said shuttle (16) comprises a support member (26) carrying a drive rail (28) extending in said displacement direction.

6. Motor according to claim 5 wherein said drive rail (28) is flexibly attached to said support member (26) at one or both ends of said drive rail (28).

7. Motor according to one of claims 1 to 6 wherein said drive element (22) comprises electrostrictive material, adapted to generate an electric output in response to mechanical stress applied to the drive element (22).

8. Motor according to one of claims 1 to 6, wherein said drive element (22) comprises piezoelectric material.

9. Motor according to one of claims 1 to 6, wherein said processing means includes a voltage sensor.

10. Motor according to one of claims 1 to 6 wherein said drive element (22) comprises magnetostrictive material, adapted to generate a magnetic field in response to mechanical stress applied to said drive element (22).

11. Motor according to claim 10, wherein said processing means includes a magnetic field sensor.

12. Method of controlling an electromechanical motor according to one of the preceding claims, the method comprising the steps of:
detecting an output signal generated by said drive element (22) or said position sensor (3 8) in response to an external force being applied to the drive element (22); and
controlling said drive unit so that the shuttle (16) is moved in a predetermined direction in response to said detected output signal, irrespective of the previous state of the electric motor.

13. Method according to claim 12, further comprising the steps of:
detecting a position of the shuttle (16) relative to the stator; and
controlling said drive unit (20) so that the shuttle (16) is moved in said predetermined direction to a predetermined position relative to the stator (14).

14. Method according to claims 12 or 13 wherein the output signal generated by said drive element (22) or said position sensor (38) is used for interrupting normal operation of the motor or waking-up control of the motor if it is in stand-by operation.

## Patentansprüche

1. Elektromechanischer Motor mit
einem Stator (14), der eine Antriebseinheit (20) und ein Rahmenbauteil (18), in dem die Antriebseinheit gehalten ist, aufweist, und
einem Schlitten (16), der dazu eingerichtet ist, gesteuert durch die Antriebseinheit eine Bewegung in einer Translationsrichtung relativ zu dem Stator (14) auszuführen, wobei die Antriebseinheit (20) wenigstens ein elektromechanisches Antriebselement, das sich in der Translationsrichtung erstreckt, und ein Antriebspolster (24), das dazu eingerichtet ist, eine Bewegung des Antriebselementes (22) auf den Schlitten (16) zu übertragen, aufweist, **gekennzeichnet durch**:
Verarbeitungsmittel, die mit dem Antriebselement (22) verbunden und dazu eingerichtet sind, ein elektrisches oder magnetisches Ausgangssignal zu verarbeiten, das von dem Antriebselement (22) abhängig von einer Verformung des Antriebselementes aufgrund eines Stoßes oder andere externe Kräfte, die auf den Motor einwirken, erzeugt wird,
wobei die Verarbeitungsmittel eine Steuereinheit zum Steuern der Antriebseinheit aufweisen, um eine Bewegung des Antriebselementes derart zu erzeugen, dass der Schlitten abhängig von dem Ausgangssignal und unabhängig von dem vorhergehenden Zustand des elektrischen Motors relativ zu dem Stator in eine vorgegebene Richtung bewegt wird.

2. Motor nach Anspruch 1, mit ferner
einem Positionssensor (38), der dazu eingerichtet ist, die Position des Schlittens relativ zu dem Stator (14) zu erfassen.

3. Elektromechanischer Motor, mit
einem. Stator (14), der eine Antriebseinheit (20) und ein Rahmenbauteil (18), in dem die Antriebseinheit gehalten ist, aufweist, und
einem Schlitten (16), der dazu eingerichtet ist, gesteuert durch die Antriebseinheit eine Bewegung in einer Translationsrichtung relativ zu dem Stator (14) auszuführen, wobei die Antriebseinheit (20) wenigstens ein elektromechanisches Antriebselement, das sich in der Translationsrichtung erstreckt, und ein Antriebspolster (24), das dazu eingerichtet ist, eine Bewegung des Antriebselementes (22) auf den Schlitten (16) zu übertragen, aufweist,
einem Positionssensor (38), der dazu eingerichtet ist, eine Veränderung der Position des Schlittens (16) relativ zu dem Stator (14) zu erfassen; **gekennzeichnet durch**:
Verarbeitungsmittel, die mit dem Positionssensor verbunden und dazu eingerichtet sind, ein von dem Positionssensor erzeugtes Ausgangssignal zu empfangen und zu verarbeiten, wobei die Verarbeitungsmittel eine Steuereinheit zum Steuern der Antriebseinheit umfassen, um eine Bewegung des Antriebselementes derart zu erzeugen, dass der Schlitten abhängig von dem Ausgangssignal und unabhängig von dem vorherigen Zustand des elektrischen Motors relativ zu dem Stator in eine vorgegebene Richtung bewegt wird.

4. Motor nach Anspruch 2 oder 3, wobei der Positionssensor (38) Hall-Elemente oder optische Sensoren umfasst.

5. Motor nach einem der vorangehenden Ansprüche, wobei der Schlitten (16) ein Trägerbauteil (26) aufweist, welches eine Antriebsschiene (28) trägt, die sich in der Richtung der Verschiebung erstreckt.

6. Motor nach Anspruch 5, wobei die Antriebsschiene (28) an dem Trägerbauteil (26) an einem oder beiden Enden der Antriebsschiene (28) flexible angebracht ist.

7. Motor nach einem der Ansprüche 1 bis 6, wobei das Antriebselement (22) ein elektrostriktives Material umfasst, das dazu geeignet ist, abhängig von einer an das Antriebselement (22) angelegten mechanischen Belastung ein elektrisches Ausgangssignal zu erzeugen.

8. Motor nach einem der Ansprüche 1 bis 6, wobei das Antriebselement (22) ein piezoelektrisches Material umfasst.

9. Motor nach einem der Ansprüche 1 bis 6, wobei die Verarbeitungsmittel einen Spannungssensor umfassen.

10. Motor nach einem der Ansprüche 1 bis 6, wobei das Antriebselement (22) magnetostriktives Material umfasst, das dazu geeignet ist, abhängig von einer an das Antriebselement (22) angelegten mechanischen Belastung ein magnetisches Feld zu erzeugen.

11. Motor nach Anspruch 10, wobei die Verarbeitungsmittel einen Magnetfeldsensor umfassen.

12. Verfahren zum Steuern eines elektromechanischen Motor nach einem der vorangehenden Ansprüche, mit den Verfahrensschritten:
Erfassen eines von dem Antriebselement (22) oder dem Positionssensor (38) erzeugten Ausgangssignals abhängig von einer externen Kraft, die an das Antriebselement (22) angelegt wird; und
Steuern der Antriebseinheit derart, dass der Schlitten (16) abhängig von dem erfassten Ausgangssignal und unabhängig von dem vorhergehenden Zustand des elektrischen Motors in eine vorgegebene Richtung bewegt wird.

13. Verfahren nach Anspruch 12, mit den weiteren Schritten:
Erfassen einer Position des Schlittens (16) relativ zu dem Stator; und
Steuern der Antriebseinheit (20) derart, dass der Schlitten (16) in der vorgegebenen Richtung zu einer vorgegebenen Position in Bezug auf den Stator (14) bewegt wird.

14. Verfahren nach Anspruch 12 oder 13, wobei das von dem Antriebselement (22) oder dem Positionssensor (38) erzeugte Ausgangssignal dazu verwendet wird, den normalen Betrieb des Motors zu unterbrechen oder den Motor zu aktivieren, wenn er in Stand-By-Betrieb ist.

## Revendications

1. Moteur électromécanique comprenant :
un stator (14) comprenant un module d'entraînement (20) et une partie de châssis (18), la partie de châssis maintenant le module d'entraînement ;
une navette (16) adaptée à être déplacée par rapport au stator (14) selon un mouvement de translation, le mouvement de la navette étant contrôlé par le module d'entraînement (20), le module d'entraînement (20) comprenant au moins un élément d'entraînement électromécanique (22) s'étendant le long de la direction de translation et un plot d'entraînement (24) adapté à transférer le mouvement de l'élément d'entraînement (22) à la navette (16) ;
**caractérisé par** un moyen de traitement connecté à l'élément d'entraînement (22) et adapté à recevoir et à traiter un signal de sortie électrique ou magnétique produit par l'élément d'entraînement (22) en réponse à une déformation de l'élément d'entraînement par suite d'un impact ou d'autres forces externes appliquées au moteur, le moyen de traitement comprenant un module de commande pour le module d'entraînement de façon à produire un mouvement du module d'entraînement de sorte que la navette est déplacée dans une direction prédéterminée par rapport au stator en réponse au signal de sortie indépendamment de l'état précédent du moteur électrique.

2. Moteur selon la revendication 1, comprenant en outre un capteur de position (38) adapté à détecter la position de la navette (16) par rapport au stator (14).

3. Moteur électromécanique comprenant :
un stator (14) comprenant un module d'entraînement (20) et une partie de châssis (18), la partie de châssis maintenant le module d'entraînement ;
une navette (16) adaptée à être déplacée par rapport au stator (14) selon un mouvement de translation, le mouvement de la navette étant contrôlé par le module d'entraînement (20), le module d'entraînement (20) comprenant au moins un élément d'entraînement électromécanique (22) s'étendant le long de la direction de translation et un plot d'entraînement (24) adapté à transférer le mouvement de l'élément d'entraînement (22) à la navette (16) ;
un capteur de position (38) adapté à détecter la position de la navette (16) par rapport au stator (14) ;
**caractérisé par** un moyen de traitement connecté au capteur de position et adapté à recevoir et à traiter un signal de sortie électrique ou magnétique produit par le capteur de position, le moyen de traitement comprenant un module de commande pour contrôler le module d'entraînement de façon à produire un mouvement du module d'entraînement de sorte que la navette est déplacée dans une direction prédéterminée par rapport au stator en réponse au signal de sortie indépendamment de l'état précédent du moteur électrique.

4. Moteur selon la revendication 2 ou 3, dans lequel le capteur de position (38) comprend des éléments Hall ou des capteurs optiques.

5. Moteur selon l'une quelconque des revendications précédentes, dans lequel la navette (16) comprend un élément support (26) portant un rail d'entraînement (28) s'étendant dans la direction de déplacement.

6. Moteur selon la revendication 5, dans lequel le rail d'entraînement (28) est monté de façon flexible sur l'élément support (26) à l'une ou aux deux extrémités du rail d'entraînement (28).

7. Moteur selon l'une quelconque des revendications 1 à 6, dans lequel l'élément d'entraînement (22) comprend un matériau électrostrictif adapté à produire une sortie électrique en réponse à une contrainte mécanique appliquée à l'élément d'entraînement (22).

8. Moteur selon l'une quelconque des revendications 1 à 6, dans lequel l'élément d'entraînement (22) comprend un matériau piézoélectrique.

9. Moteur selon l'une quelconque des revendications 1 à 6, dans lequel le moyen de traitement comprend un capteur de tension.

10. Moteur selon l'une quelconque des revendications 1 à 6, dans lequel l'élément d'entraînement (22) comprend un matériau magnétostrictif adapté à produire un champ magnétique en réponse à une contrainte mécanique appliquée à l'élément d'entraînement (22).

11. Moteur selon la revendication 10, dans lequel le moyen de traitement comprend un capteur de champ magnétique.

12. Procédé de commande d'un moteur électromécanique selon l'une quelconque des revendications précédentes, ce procédé comprenant les étapes suivantes :
détecter un signal de sortie produit par l'élément d'entraînement (22) ou le capteur de position (38) en réponse à une force externe appliquée à l'élément d'entraînement (22) ; et commander le module d'entraînement de sorte que la navette (16) est déplacée dans une direction prédéterminée en réponse au signal de sortie détecté, quel que soit l'état précédent du moteur électrique.

13. Procédé selon la revendication 12, comprenant en outre les étapes suivantes :
détecter une position de la navette (16) par rapport au stator ; et
commander le module d'entraînement (20) de sorte que la navette (16) est déplacée dans la direction prédéterminée vers une position prédéterminée par rapport au stator (14).

14. Procédé selon la revendication 12 ou 13, dans lequel le signal de sortie produit par l'élément d'entraînement (22) ou le capteur de position (38) est utilisé pour interrompre le fonctionnement normal du moteur ou pour une commande de réveil du moteur si celui-ci est en mode de veille.
